# EUROPÄISCHE PATENTANMELDUNG

(11) **EP 2 034 195 A2**
(43) Veröffentlichungstag der Anmeldung: **11.03.2009**
(21) Anmeldenummer: 08014642.6
(22) Anmeldetag: 18.08.2008
(51) Int. Cl.: F16B 19/10

(54) **Blindniet und Nietdorn**

(30) Priorität: 28.08.2007 DE 102007042190
(71) Anmelder: Adolf Würth GmbH & Co. KG, 74653 Künzelsau (DE)
(72) Erfinder:
(74) Vertreter: Patentanwälte Ruff, Wilhelm, Beier, Dauster & Partner

(57) **Zusammenfassung**

Die Erfindung schlägt einen Blindniet vor, der als zylindrischen Hülse mit einem radial überstehenden Flansch (5) ausgebildet ist. Der Flansch (5) weist auf seiner dem Nietkörper (1) zugewandten Seite eine quer zur Längsachse verlaufende Anlagefläche (6) auf. An dem gegenüberliegenden Ende ist eine in der Außenkontur des Blindniets liegende ggf. scharfe Kante (4) gebildet. Die durch den Blindniet verlaufende Innenöffnung (2) weist an einer Stelle, die näher an dem scharfkantigen Ende (4) des Blindniets liegt als an dem Flansch (5), eine Verengung (3) auf. Vor der Verengung (3) erweitert sich der Innendurchmesser (2a) der Hülse trichterartig. In die Innenöffnung (2) wird ein Nietdorn (10) schlagartig eingesetzt, der eine Spitze (12) mit der gleichen Geometrie aufweist wie die Erweiterung (2a) vor der Engstelle (3). Beim schlagartigen Eintreiben findet eine Verschweißung längs einer um den Nietdorn (10) und um die Innenöffnung (2) des Blindniets herum laufenden Umfangsfläche statt. Diese Verschweißung führt zu einer zugfesten Verbindung zwischen dem Nietdorn (10) und dem Blindniet. Die Engstelle (3) kann auch in einem Sackloch angeordnet sein.

## Beschreibung

Die Erfindung betrifft einen Blindniet, einen als Zugelement wirkenden Nietdorn und ein Verfahren zum Setzen eines Blindniets.

Blindniete sind bekannt. Sie dienen dazu, etwas an einem Element zu befestigen, ohne an dessen Rückseite anzugreifen. Es kann sich um die Verbindung zweier Teile handeln oder auch um die Verbindung metallischer und nichtmetallischer Fügestoffe.

Blindniete dieser Art können sowohl so verwendet werden, dass vorher mit einem Bohrer ein Loch gebohrt wird, in das der Blindniet dann eingesetzt wird. Es gibt ebenfalls Blindniete mit einer Bohrspitze, so dass in einem Arbeitsgang zunächst das Loch gebohrt und anschließend der Blindniet in dieses Loch eingesetzt wird. Ebenfalls bekannt sind Vorgänge, wo ein Blindniet ruckartig ohne Vorbohren in das Blech eingeschossen wird. Die Aufweitung der Niethülse kann durch einen Schlag in Setzvorrichtung oder durch ein Ziehen entgegengesetzt zur Setzvorrichtung erfolgen. Hierzu haben die Blindniete üblicherweise einen Dorn, der Teil des konfektionierten Blindniets ist, an dem nach dem Setzen gezogen wird, und bei dem der überschüssige Teil des Nietdorns weggeworfen wird.

Der Erfindung liegt die Aufgabe zu Grunde, einen Blindniet im Hinblick auf seiner Handhabung weiter zu verbessern.

Zur Lösung dieser Aufgabe schlägt die Erfindung einen Blindniet mit den Merkmalen des Anspruchs 1, einen Nietdorn und ein Verfahren zum Setzen eines Nietdorns vor. Weiterbildungen der Erfindung sind Gegenstand der jeweiligen abhängigen Patentansprüche.

Der von der Erfindung vorgeschlagene Blindniet weist also eine Verbindungsstelle auf, mit der ein Zugelement verbunden werden kann, um in einer an sich bekannten Weise einen mitteleren oder vorderen Teil des Nietkörpers nach außen zu verformen, um dadurch einen Schließkopf zu bilden. Dieses Zugelement ist nicht Teil des Blindniets, sondern ein getrenntes Teil, das während des Setzvorgangs, beispielsweise unmittelbar vor der Schließkopfbildung, mit dem Nietkörper verbunden wird. Die Verbindungsstelle liegt aber nicht als Fläche quer zur Zugrichtung, sondern in Zugrichtung oder unter einem flachen Winkel zur Zugrichtung. Flächen in dieser Anordnung sind bislang nur als Flächen zum Aufweiten bekannt, nicht aber als Flächen zum Anbringen eines Zugelements.

Insbesondere kann in Weiterbildung der Erfindung vorgesehen sein, dass die Verbindungsstelle an einer Engstelle einer durch den Nietkörper durchgehenden Öffnung ausgebildet ist. Diese durchgehende Öffnung kann auf der Außenseite, also der Seite, von der aus die Befestigung erfolgt, als zylindrische Öffnung beginnen, die sich bis zu der Engstelle als zylindrische Öffnung fortsetzt.

In nochmaliger Weiterbildung der Erfindung kann vorgesehen sein, dass der Nietkörper hülsenartig mit einer durchgehenden Öffnung ausgebildet ist, wobei die Verbindungsstelle auf der die Anlagefläche aufweisenden Seite des Flanschs mit Abstand von diesem angeordnet ist.

Es kann sich aber auch um ein Sackloch handeln, so dass das Setzende des Nietkörpers geschlossen ist.

Insbesondere kann das Setzende des Nietkörpers eine Stanzgeometrie oder einer Ringschneidegeometrie aufweisen.

Erfindungsgemäß kann vorgesehen sein, dass sich die durchgehende Öffnung jenseits der Verbindungsstelle bis zur Bildung einer scharfen Kante am Ende des Nietkörpers erweitert.

Die Verbindungsstelle, die durch eine Verengung der Innenöffnung gebildet wird, kann so ausgebildet sein, dass sich die zylindrische Öffnung trichterförmig bis zur Engstelle verengt.

In nochmaliger Weiterbildung der Erfindung kann vorgesehen sein, dass der Nietkörper eine Schwächung seiner Wanddicke aufweist, um die Bildung des Schließkopfs zu erleichtern. Diese Schwächung ist vorzugsweise zwischen der Anlagefläche des Flanschs und der Verbindungsstelle für das Zugelement angeordnet.

Sie kann insbesondere durch eine an der Außenseite des Nietkörpers umlaufenden Kerbe gebildet werden.

Die Erfindung schlägt ebenfalls einen Nietdorn für einen derartigen Blindniet vor. Der Nietdorn weist einen zylindrischen Schaft auf, der an seinem vorderen zum Eingriff in den Blindniet bestimmten Ende sich im Durchmesser verjüngt. Die Verjüngung soll dazu dienen, dass sich der Nietdorn leichter in die Engstelle einfügt.

Insbesondere kann vorgesehen sein, dass der Nietdorn an seinem vorderen Ende eine Spitze aufweist, die einen abnehmenden Durchmesser aufweist, also beispielsweise kegelförmig, ballistisch oder ogival ausgebildet ist.

Diese Form der Spitze kann eine ähnliche Geometrie aufweisen wie die Verengung an der Innenseite des Blindniets zur Bildung der Engstelle.

Die Erfindung schlägt ebenfalls einen Blindniet mit einem derartigen Nietdorn vor, wobei der Durchmesser des Schafts des Nietdorns etwa dem Innendurchmesser der zylindrischen durchgehenden Öffnung des Nietkörpers vor der Engstelle entspricht und daher etwas größer als der Innendurchmesser der Öffnung an der Engstelle ist.

Wenn der Nietdorn in den Blindniet beim Setzen des Blindniets eingetrieben wird, findet an der Engstelle eine stoffschlüssige Verbindung wie z. B. Schweißen zwischen dem Nietdorn und dem Blindniet statt.

Der Nietdorn kann so ausgebildet sein, dass er in dieser Verbindungsposition mit dem Blindniet mit seinem vorderen Ende, insbesondere dann, wenn es sich um eine Spitze handelt, aus dem vorderen Ende des Blindniets herausragt.

In Weiterbildung der Erfindung kann vorgesehen sein, dass der Blindniet aus einem partiell weicheren Material als der Nietdorn besteht.

Die Erfindung schlägt ebenfalls eine Kombination aus einem Blindniet und einem Nietdorn vor.

Der von der Erfindung vorgeschlagene Blindniet wird folgendermaßen gesetzt. Der Blindniet wird, beispielsweise magaziniert, einem Gerät zugeführt, in dem er in der Nähe des Elements liegt, in das er eingetrieben werden soll. Anschließend wird der Nietdorn schlagartig in den Blindniet eingetrieben, wobei er wegen seiner sich verjüngenden Spitze und der Engstelle des Blindniets eine hohe Klemmkraft aufbaut. Der Nietkörper des Blindniets stanzt aufgrund einer scharfen Außenkante ein Loch in das Element ein. Wenn die weitere Vorschubkraft sowohl auf den Nietdorn als auch den Blindniet einwirkt, verbindet sich der Nietdorn an der Engstelle mit dem Blindniet stoffschlüssig. Dadurch entsteht eine zugfeste Verbindung zwischen dem Nietdorn und dem Blindniet, da die Relativgeschwindigkeit zwischen Nietdorn und Hülse schlagartig auf Null geht und die sich durch die Reibungswärme erzeugten Fügeoberfläche miteinander verschweißen.

Die Vorgänge des Erhitzens, Stanzens und Klemmens können sich in beliebiger Weise zeitlich überschneiden.

Wegen des Aufbaus der Klemmkraft an der Engstelle vor und während des Verschweißens wird der vordere Bereich des Blindniets radial aufgeweitet, so dass der eingetriebene Niet in der Öffnung des Materials, durch das er hindurchgeführt wurde, ein Spiel aufweist. Durch die Verschweißung zwischen Nietdorn und Blindniet wird die Knicksteifigkeit erhöht und die Schnittkräfte über die Schaftgeometrie und Kopfgeometrie beider Körper verteilt. es kann aber auch ausreichen, dem Stanzen nur die Hülse zu verwenden.

Nach dem Verschweißen von Nietdorn und Blindniet kann in der an sich bekannten Weise an dem Nietdorn gezogen werden, um auf der gegenüberliegenden Seite einen Schließkopf für die Vernietung zu bilden. Es ist vorgesehen, dass nach Bildung des Schließkopfs bei weiterem Ziehen der Nietdorn in der Verbindungsstelle, also der Schweißstelle, getrennt wird. Der Nietdorn kann dann ein zweites Mal verwendet werden.

Ebenfalls möglich und vorgeschlagen wird, den Nietdorn außerhalb des Blindniets abzutrennen, so dass ein Teil des Nietdorns in der Vertiefungen bleibt und zur Verstärkung beiträgt.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: einen Längsschnitt durch einen Blindniet nach der Erfindung;
- Figur 2: einen Längsschnitt durch den Blindniet mit einem eingesetzten Nietdorn;
- Figur 3: eine Seitenansicht des Blindniets zum Beginn des Einsetzen des Niets;
- Figur 4: eine teilweise geschnittene Seitenansicht in einem weiteren Stadium des Einsetzens des Niets;
- Figur 5: den vollständig eingesetzten Blindniet vor dem Herausziehen des Nietdorns;
- Figur 6: einen der Figur 1 entsprechenden Schnitt bei einer weiteren Ausführungsform eines Blindniets;
- Figur 7: die Seitenansicht eines Nietdorns mit einem Flansch..

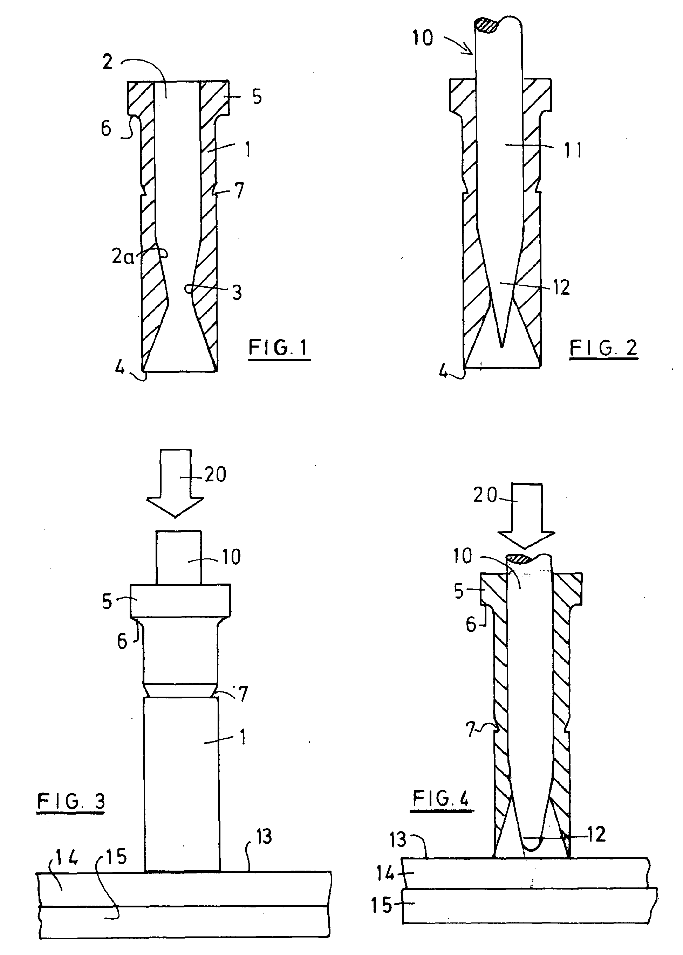

Figur 1 zeigt einen Längsschnitt durch den Blindniet nach der Erfindung. Der Blindniet enthält einen Nietkörper 1, der zylindrisch ausgebildet ist. Er ist in diesem Anwendungsbeispiel als Hülse mit einer durchgehenden Innenöffnung 2 ausgebildet, die in dem in Figur 1 oberen Bereich einen konstanten Querschnitt aufweist, bis sich der Durchmesser trichterartig zur Bildung einer Engstelle 3 verringert. Auf der dann gegenüberliegenden Seite der Engstelle 3 erweitert sich der Innendurchmesser der durchgehenden Öffnung 2 wieder, bis an dem in Figur 1 unteren Ende 4 eine Kante gebildet ist, die auf einem Kreis liegt, dessen Durchmesser dem Außendurchmesser des zylindrischen Teils des Blindniets entspricht. Die Kante 4 ist also an der Außenseite des Nietkörpers 1 gebildet. An dem gegenüberliegenden Ende weist der Nietkörper 1 einen Flansch 5 auf, der radial nach außen vorspringt. Die der Kante 4 unten in Figur 1 zugewandte Seite des Flanschs 5 bildet eine Anlageschulter 6.

Zwischen der Engstelle 3 der Öffnung 2 und der Anlageschulter 6 des Flanschs 5 ist an der Außenseite des Nietkörpers 1 eine umlaufende Kerbe 7 gebildet, an der die Wandstärke des Nietkörpers 1 geschwächt ist.

Der Öffnungswinkel der Innenöffnung 2 vor und hinter der Engstelle 3 kann gleichgroß sein oder differieren.

Zum Zusammenwirken mit dem gerade beschriebenen Nietkörper beziehungsweise Blindniet ist ein Nietdorn 10 bestimmt, der in Figur 2 zusammen mit dem Blindniet dargestellt ist. Der Nietdorn weist einen zylindrischen Schaft 11 auf, der in seinem vorderen zum Einsetzen in den Blindniet bestimmten Bereich eine abgerundete kegelförmige Spitze 12 aufweist. Die Geometrie dieser kegelförmigen Spitze 12 entspricht der Geometrie des sich verengenden Teils 2a der durchgehenden Innenöffnung 2 des Nietkörpers 1 vor der Engstelle 3. Dadurch liegt die Spitze 12 des Nietdorns 10 in der in Figur 2 dargestellten Position über eine Fläche an dem Nietkörper 1 an, nämlich dort, wo die Kegelmantelfläche des Dorns mit der inneren Kegelfläche der Öffnung des Nietkörpers übereinstimmt.

In der Relativposition, wie sie in Figur 2 dargestellt ist, wird der Blindniet auf die Oberfläche 13 zweier miteinander zu verbindender Elemente, beispielsweise Bleche 14, 15 aufgesetzt beziehungsweise aufgelegt. Seine vordere Kante 4 liegt daher auf der Oberfläche 13 des oberen Fügewerkstoffs 14 auf. Anschließend erfolgt ein Eintreiben zunächst des Nietdorns 10 in den Blindniet mit seinem Nietkörper 1. Dabei erweitert sich der Nietkörper 1 aufgrund der Klemmkraft zwischen seiner Innenseite und der Spitze 12 des Nietdorns 10 etwas. Sobald die durch den Pfeil 20 dargestellte Kraft weiter ausgeübt wird, wird jetzt aus der in Figur 4 dargestellten Position der Nietdorn 10 und der Blindniet vorwärts getrieben, wobei sich der Blindniet jetzt ein Loch in den beiden Elementen 14, 15 stanzt. Gleichzeitig tritt aufgrund der großen Erwärmung zwischen dem Nietdorn 10 und dem Nietkörper 1 eine Verschweißung an der bisherigen Engstelle 3 auf. Diese Verschweißung führt dazu, dass der Nietdorn 10 jetzt mit dem Blindniet zugfest verbunden ist. Nach dem vollständigen Einschlagen des Blindniets liegt der Flansch 5 mit seiner Anlagefläche 6 auf der Oberfläche 13 des oberen Elements 14 auf. Anschließend kann an dem Nietdorn 10 in Richtung des Pfeils 30 gezogen werden, was in den Figuren nicht näher erläutert ist, da dieser Vorgang des Ziehens an sich bekannt ist. Beim Ziehen verformt sich der unterhalb des Blechs 15 befindliche Teil des Blindniets nach außen, was durch die Kerbe 7 erleichtert wird. Es bildet sich also ein Schließkopf auf der gegenüberliegenden Blindseite, also eine Vernietung der beiden Elemente 14, 15.

Der aus dem Blindniet dann herausragende Teil des Nietdorns 10 kann dann abgetrennt werden, wenn keine Trennung der Schweißnaht erfolgt. In diesem Fall kann der im Nietkörper verbleibende Teil des Nietdorns als sogenannter Permanentdorn zur Verstärkung des Niets dienen. Die Trennung des Dorns von der Schweißstelle kann mittels Zugkraftüberwachung geschehen. In diesem Fall kann der Nietdorn wiederverwendet werden.

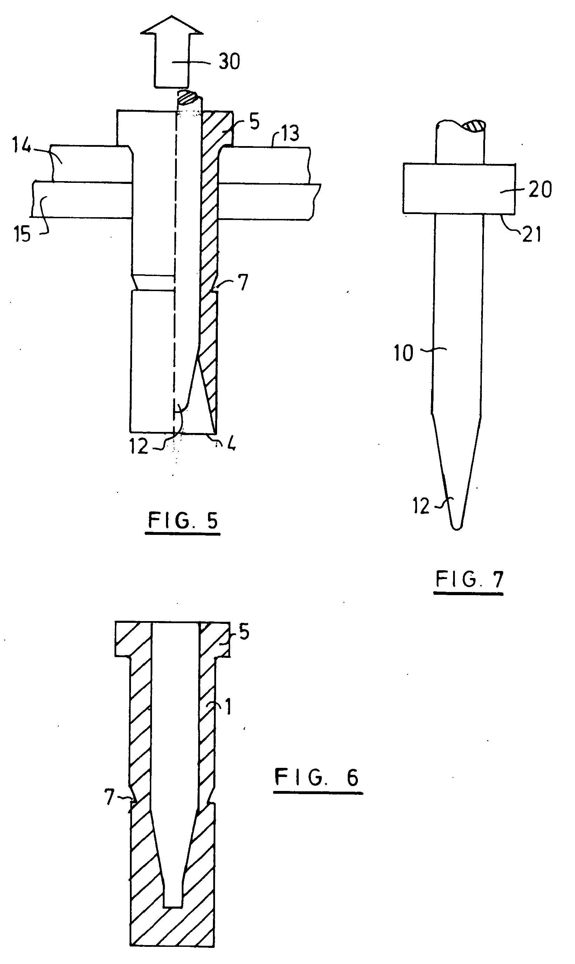

Figur 6 zeigt den einen der Figur 1 entsprechenden Schnitt durch einen weiteren Blindniet, bei dem ebenfalls eine Verbindungsstelle 2a in einer Kegelmantelfläche gebildet ist. Im Unterschied zu der Ausführungsform der Figur 1 ist der Nietkörper aber nicht mit einer durchgehenden Öffnung 2 versehen, sondern mit einem Sackloch. Das Setzende 4 des Nietkörpers ist also geschlossen. Es kann eine zumindest angenähert scharfe Kante aufweisen, die als Stanzgeometrie wirkt.

Figur 7 zeigt die Seitenansicht eines Nietdorns in seinem vorderen Bereich. Wiederum weist der Nietdorn 10 eine abgerundete kegelförmige Spitze 12 auf. Diese könnte auch eine gebogen verlaufende Außenkontur aufweisen.

Der Nietdorn 10 enthält einen Flansch 20, der in einem solchen Abstand von der Spitze angeordnet ist, dass er die Wirkungsweise des Nietdorns nicht stört, sondern dass seine der Spitze 12 zugewandte Unterseite 21 die Eindringtiefe des Nietdorns in den Blindniet begrenzt.

## Patentansprüche

1. Blindniet, mit
1.1 einem im wesentlichen zylindrischen Nietkörper (1),
1.2 einem gegenüber dem Nietkörper (1) radial vorspringenden eine quer zur Achse des Nietkörpers (1) verlaufende Anlagefläche (6) bildenden Flansch (5),
1.3 einem mit Abstand von der Anlagefläche (6) des Flanschs (5) angeordneten vorderen Setzende (4) und
1.4 einer Verbindungsstelle für ein keinen Teil des Blindniets bildendes bzw. mit dem Blindniet nicht verbundenes Zugelement zur Bildung eines Schließkopfs durch Ziehen an dem Zugelement, die
1.5 an einer umlaufenden keinen Formschluß bewirkenden Mantelfläche ausgebildet ist.

2. Blindniet nach Anspruch 1, bei dem die Verbindungsstelle an einer Engstelle (3) einer Öffnung in dem oder durch den Nietkörper (1) ausgebildet ist.

3. Blindniet nach Anspruch 1 oder 2, bei dem der Nietkörper (1) hülsenartig mit einer durchgehenden Öffnung (2) ausgebildet ist, in der die Verbindungsstelle auf der die Anlagefläche (6) aufweisenden Seite des Flanschs (5) mit Abstand von diesem angeordnet ist.

4. Blindniet nach Anspruch 2 oder 3, bei dem sich die durchgehende Öffnung (2) jenseits der Verbindungsstelle bis zur Bildung einer ggf. scharfen Kante (4) am Ende des Nietkörpers (1) erweitert.

5. Blindniet nach einem der Ansprüche 2 bis 4, bei dem sich die durchgehende Öffnung (2) zur Bildung der Verbindungsstelle trichterförmig verengt.

6. Blindniet nach Anspruch 2, bei dem der Nietkörper ein geschlossenes Setzende (4) aufweist und die Verbindungsstelle an der Innenseite eines Sacklochs ausgebildet ist.

7. Blindniet nach einem der vorhergehenden Ansprüche, bei dem das Setzende des Nietkörpers eine Stanzgeometrie oder eine Ringschneidegeometrie aufweist.

8. Blindniet nach einem der vorhergehenden Ansprüche, bei dem der Nietkörper (1) eine Schwächung seiner Wanddicke aufweist, die zwischen der Anlagefläche (6) des Flanschs (5) und der Verbindungsstelle für das Zugelement angeordnet ist.

9. Blindniet nach einem der vorhergehenden Ansprüche, mit einer an der Außenseite des Nietkörpers (1) umlaufenden Kerbe (7) zur Bildung einer Schwächung der Wanddicke des Nietkörpers (1).

10. Nietdorn für einen Blindniet mit einer Verbindungsstelle an einer umlaufenden Umfangsfläche, insbesondere nach einem der vorhergehenden Ansprüche, mit
10.1 einem zylindrischen Schaft (11) und
10.2 einem vorderen sich im Durchmesser verringernden Setzende (12).

11. Nietdorn nach Anspruch 10, bei dem das vordere Ende des Nietdorns (10) als ggf abgerundete Spitze (12) mit einer Kegelform ausgebildet ist.

12. Nietdorn nach Anspruch 10 oder 11, mit einem seine Eindringtiefe in den Nietkörper begrenzenden Flansch (20).

13. Blindniet nach einem der Ansprüche 1 bis 9, enthaltend einen Nietdorn nach einem der Ansprüche 10 bis 12, wobei der Durchmesser des Schafts (11) des Nietdorns (10) etwa dem Innendurchmesser der zylindrischen durchgehenden Öffnung (2) bzw. des Sacklochs des Nietkörpers (1) entspricht und etwas größer als der Innendurchmesser der Öffnung (2) an der Verbindungsstelle für das Zugelement ist.

14. Blindniet nach Anspruch 13, bei dem der Nietdorn in der Position, in der er mit der Verbindungsstelle verbunden ist, mit seiner Spitze aus dem vorderen Setzende des Blindniets herausragt.

15. Blindniet nach Anspruch 13 oder 14, bei dem der Blindniet partiell aus einem weicheren Material als der Nietdorn besteht.

16. Kombination aus einem Blindniet nach einem der Ansprüche 1 bis 9 und einem Nietdorn nach einem der Ansprüche 10 bis 12.

17. Verfahren zum Setzen von Blindnieten, mit folgenden Verfahrensschritten:
17.1 der Blindniet wird vor den Untergrund (14, 15) gehalten,
17.2 der Nietdorn (10) wird in den Blindniet vorgetrieben,
17.3 der Blindniet stanzt ein Loch in dem Untergrund (14, 15),
17.4 der Nietdorn (10) verbindet sich mit dem Blindniet,
17.5 an dem Nietdorn (10) wird zur Bildung eines Schließkopfs in Auszugsrichtung gezogen.
